# FASCICULE DE BREVET EUROPEEN

(11) **EP 2 800 891 B1**
(45) Date de publication et mention de la délivrance du brevet: **21.10.2020**
(21) Numéro de dépôt: 13700193.9
(22) Date de dépôt: 04.01.2013
(51) Int. Cl.: F02M 25/00, F02D 41/22, F02D 19/12, F02D 41/00

(54) **SYSTÈME D'ADDITIVATION DE CARBURANT ET DE DIAGNOSTIC POUR UN VÉHICULE À MOTEUR À COMBUSTION INTERNE**
VORRICHTUNG ZUR ZUGABE EINES ZUSATZMITTELS IN EINEN KRAFTSTOFF UND ZUR DIAGNOSE FÜR EIN FAHRZEUG MIT EINEM BRENNKRAFTMASCHINE
SYSTEM FOR ADDING AN ADDITIVE INTO A FUEL AND FOR DIAGNOSIS FOR A VEHICLE WITH AN INTERNAL COMBUSTION ENGINE

(30) Priorité: 04.01.2012 FR 1200024
(43) Date de publication de la demande: 12.11.2014
(73) Titulaire: Rhodia Operations, 93300 Aubervilliers (FR); Filtrauto SA, 78286 Guyancourt (FR)
(72) Inventeur: HARLE, Virginie, 60300 Senlis (FR); LALLEMAND, Michael, 93200 Saint Denis (FR); SEGUELONG, Thierry, 17220 Bourgneuf (FR); MONSALLIER, Guy, 50400 Granville (FR)
(74) Mandataire: Senninger, Thierry
(86) Numéro de dépôt international: PCT/EP2013/000012
(87) Numéro de publication internationale: WO 2013/102621

(56) Documents cités:
- EP-A2- 1 061 251
- EP-A2- 1 229 227
- WO-A1-2005/071316
- WO-A1-2005/113279
- WO-A1-2006/100377
- WO-A1-2012/104552
- DE-A1- 10 311 287
- DE-C1- 4 028 253
- FR-A1- 2 312 062
- US-A- 3 392 753
- US-A- 4 736 769
- US-A- 6 068 672

## Description

L'invention concerne un système d'additivation de carburant et de diagnostic pour un véhicule à moteur à combustion interne. Un exemple de l'état de la technique est décrit dans le document EP 1 229 227 A2.

Les nouvelles technologies moteur, comme les moteurs diesel à système Common Rail et à injection très haute pression de carburant ou encore les moteurs essence à injection directe sont très performantes mais toutefois très sensibles à la qualité du carburant.

Ainsi, il y a un bénéfice à utiliser un carburant contenant des additifs améliorant sa qualité, notamment les additifs d'amélioration de la distribution du carburant dans le moteur, les additifs d'amélioration des performances du fonctionnement du moteur et les additifs d'amélioration de la stabilité du fonctionnement du moteur. Il s'agit par exemple d'agents détergents, d'additifs de lubrification ou encore d'additifs anticorrosion.

Toutefois, la qualité des carburants commerciaux disponibles ne permet pas toujours d'alimenter le moteur avec un carburant contenant suffisamment d'additifs. Par ailleurs, les carburants répondent à travers le monde à des normes plus ou moins exigeantes et possèdent donc une qualité variable. Il y a donc intérêt pour un fonctionnement optimal du moteur à adapter la concentration en additif contenue dans le carburant.

De plus, pour répondre aux nouvelles normes de contrôle des émissions des véhicules, notamment diesel, les véhicules sont progressivement équipés de moyens de dépollution de type filtre à particules (FAP). C'est déjà le cas en Europe depuis l'avènement de la norme Euro 5. Dans la plupart des cas, un catalyseur est utilisé pour aider à brûler les suies périodiquement et ainsi régénérer le FAP. L'utilisation d'un additif de régénération du FAP, vectorisé par le carburant alimentant le moteur ou encore « Fuel Borne Catalyst » (FBC), s'est avéré répondre à de nombreux critères puisqu'elle permet de régénérer le FAP plus rapidement et à plus basse température que la technologie concurrente appelée Catalysed Soot Filter (CSF) ou Filtre à Particules Catalysé.

### COPIE DE CONFIRMATION

On a donc intérêt à équiper le véhicule d'un dispositif permettant d'introduire dans le carburant un additif d'aide à la régénération du FAP et/ou des additifs carburants améliorant la qualité du carburant et/ou le fonctionnement du moteur et/ou sa durabilité.

On sait qu'il existe des systèmes permettant d'introduire dans le carburant de tels additifs, notamment les additifs catalytiques FBC d'aide à la régénération des filtres à particules. Ces systèmes reposent généralement sur un réservoir de grande taille, de 1 à 3 litres minimum de volume, renfermant la réserve d'additif et qu'il faut implanter dans des zones proches du réservoir à carburant.

Le dosage de l'additif est alors généralement réalisé à l'aide de pompes doseuses de haute précision pilotées par une unité centrale électronique (ECU) additionnelle. Ce dispositif de dosage est géré de manière fine afin d'assurer une teneur en additif dans le carburant suffisante pour permettre une bonne régénération du FAP, mais pas trop excessive pour éviter l'encrassement prématuré du FAP du fait des résidus minéraux de régénération du FAP qui restent collectés en son sein.

Classiquement lorsque le niveau de carburant augmente dans le réservoir, suite à l'ajout de carburant, un calculateur indique à la pompe la quantité d'additif à injecter dans le réservoir de façon à maintenir une concentration en additif constante dans le carburant et ceci à tout moment.

L'ensemble de ces dispositifs (pompe / réservoir) ne dispose d'aucun moyen pour détecter de façon simple un dysfonctionnement du dispositif. On peut entendre par dysfonctionnement le fait que le dispositif ne délivre pas d'additif contrairement à la consigne qui lui est demandé par exemple suite à l'ajout de carburant lorsque l'additivation est asservie à ce paramètre. On peut entendre aussi par dysfonctionnement le fait que la quantité additivée soit significativement différente de la quantité théorique à injecter. On peut entendre encore par dysfonctionnement le fait que la quantité additivée puisse au cours du temps s'écarter (par excès ou par défaut) de la quantité théorique.

Les dysfonctionnements peuvent avoir de multiples origines comme une malfaçon sur un équipement de série (pompe, ECU...) ou encore un mauvais raccordement ou branchement de l'ensemble du dispositif. Dans ces cas, le dysfonctionnement apparaît dès les premières demandes d'additivation. Il peut aussi s'agir d'une dérive dans le temps suite par exemple à l'encrassement ou au bouchage d'une canalisation, à une évolution de l'additif, à l'usure d'une pièce. Dans ce cas, l'écart de la quantité injectée par rapport à la quantité théorique évolue généralement au cours du temps brutalement ou progressivement. Il existe de multiples autres causes possibles pouvant être à l'origine du dysfonctionnement du dispositif.

En cas de dysfonctionnement, les dispositifs actuellement en place n'identifient pas généralement de façon directe la défaillance du système d'additivation. L'ECU du véhicule va par exemple dans le cas d'un FBC détecter une défaillance du système de dépollution, notamment une mauvaise régénération du FAP sans identifier la cause véritable de la défaillance c'est-à-dire une mauvaise additivation ou une absence d'additivation.

Par ailleurs, la détection peut se faire après un laps de temps plus ou moins long après l'additivation défectueuse : typiquement dans l'exemple donné pour la régénération du FAP, on identifiera le dysfonctionnement après la régénération du FAP, donc typiquement après plus de 500 à 700 km soit plusieurs heures après l'additivation, voire uniquement après plusieurs demandes de régénération du FAP.

Dans cet exemple, ce défaut d'additivation peut avoir de graves conséquences comme la destruction du FAP et engendrer des coûts importants de remise en conformité.

A l'opposé un excès d'additif FBC ne sera pas détecté lors des régénérations du FAP puisque celui-ci se régénérera sans difficultés. Le défaut apparaitra uniquement après un parcours de plusieurs dizaines de milliers de kilomètres du véhicule lorsque le FAP sera prématuremment obstrué par un excès de cendres provenant du FBC.

Il en est de même dans le cas des autres additifs de carburant : dans ce cas la détection est encore plus délicate car de nombreux autres paramètres peuvent influencer le fonctionnement du moteur. Les conséquences, par exemple sur la détérioration des pompes haute pression ou des injecteurs haute pression, n'en restent pas moins très importantes et onéreuses dans le cas où ces organes doivent être remplacés.

Il y a donc un besoin de pouvoir détecter rapidement un défaut du système d'additivation du véhicule : on entend par rapidement le fait de pouvoir déterminer la défaillance dans l'heure, voire les minutes, suivant l'ordre d'additiver et/ou la fin de l'additivation.

Il y a donc aussi intérêt à déterminer si le dysfonctionnement correspond à une non injection ou bien à un écart entre la quantité injectée et la quantité théoriquement injectée. Ceci permet d'alerter immédiatement le système de diagnostic de défaillance central (On Board Diagnostic ou OBD) de la défaillance, d'aider au diagnostic de l'origine de la défaillance en identifiant que le système d'injection est en cause, de définir d'éventuelles actions rapides à faire pour protéger le véhicule ou certains organes par exemple en ne permettant qu'un mode d'utilisation dégradé du véhicule (limitation de la puissance par exemple).

L'objet de l'invention est donc de répondre à ces besoins.

Plus particulièrement, un premier objet de l'invention est de fournir un procédé et un dispositif pour le diagnostic d'un dysfonctionnement dans l'additivation d'un carburant. Un second objet de l'invention est de fournir un dispositif d'un fonctionnement simple.

Dans ce but, un exemple concerne un procédé pour le diagnostic du dysfonctionnement d'un dispositif d'additivation d'au moins un additif dans un carburant pour un véhicule à moteur à combustion interne, et ce procédé est caractérisé en ce qu'il comprend les étapes suivantes :
- (a) une étape d'analyse du carburant pour mesurer une variation de la teneur en additif dans le carburant;
- (b) une étape de comparaison entre la variation de la teneur en additif mesurée lors de l'étape précédente et une variation théorique de cette teneur;
- (c) une étape d'envoi d'informations lorsque l'écart entre la variation mesurée et la variation théorique de cette teneur en additif dépasse une valeur fixée.

L'invention concerne un système d'additivation de carburant et de diagnostic pour un véhicule à moteur à combustion interne, selon la revendication 1.

D'autres caractéristiques, détails et avantages de l'invention apparaîtront encore plus complètement à la lecture de la description qui va suivre, faite en référence aux dessins annexés dans lesquels :
- la figure 1 est une représentation schématique d'un dispositif de distribution d'un additif dans un circuit de circulation de carburant pour moteur à combustion interne selon l'invention,
- la figure 2 est une représentation schématique identique à celle de la figure 1, le dispositif de distribution d'additif étant disposé dans un réservoir de carburant;
- la figure 3 est une vue en coupe illustrant un distributeur d'additif selon un premier mode de réalisation de l'invention,
- les figures 4 à 11 sont des vues en coupe illustrant d'autres modes de réalisation de l'invention consistant à intégrer le distributeur d'additif dans un filtre à carburant.

Le procédé de l'invention comporte une première étape dans laquelle on analyse le carburant en vue de mesurer la variation de sa teneur en additif.

Comme on le verra plus loin l'analyse peut ne pas être basée sur une mesure directe de la teneur en additif dans le carburant mais sur une mesure indirecte, c'est-à-dire sur la mesure d'une caractéristique ou d'un paramètre du carburant qui est corrélé à cette teneur, par exemple l'absorbance du carburant.

Selon un mode de réalisation particulier de l'invention, la mesure de la variation de la teneur en additif du carburant pourra être réalisée par soustraction d'une valeur obtenue par analyse du carburant avant additivation à une valeur obtenue par analyse du carburant après additivation.

Dans une seconde étape, on compare les résultats de la mesure effectuée dans l'étape précédente avec une valeur théorique de manière à mettre en évidence un éventuel écart entre la valeur mesurée et la valeur théorique. Si un tel écart est détecté et si cet écart est supérieur à une valeur fixée au préalable le procédé de l'invention comprend alors une étape d'envoi d'informations.

Cette valeur fixée est celle au-delà de laquelle on estime qu'il y a un dysfonctionnement et elle est déterminable par l'homme du métier : elle dépend notamment du type d'additif utilisé, de la sensibilité du dispositif de détection choisi, du type de véhicule et/ou de moteur, du type de technologie moteur, du type de carburant utilisé par le véhicule, notamment de la norme en vigueur dans la zone géographique d'utilisation du véhicule, de la technologie de dépollution, notamment du type de FAP etc....

Lorsqu'un écart correspondant à cette valeur est mesuré, l'information, par exemple un signal d'avertissement, peut alors être envoyé à un ou plusieurs organes du véhicule, notamment :
- au dispositif d'injection de l'additif, notamment lorsque celui-ci peut réadapter de lui-même la quantité injectée,
- au système ECU du véhicule,
- au système de diagnostic de défaillance central du véhicule.

Le procédé peut être appliqué à fréquence définie et/ou sur événement. Selon un mode de réalisation préféré, ce procédé est appliqué après chaque ajout d'additif en ayant pris soin de réaliser une analyse du carburant avant l'additivation.

Selon un autre mode de réalisation préféré, ce procédé est appliqué après chaque ajout de carburant dans le véhicule.

Le procédé peut aussi être mis en oeuvre de façon continu.

Toute technique analytique permettant de détecter la présence, la quantité d'additif et :ou la variation de cette quantité dans le carburant pourra être utilisée. Le choix de cette technique dépendra de l'additif et du carburant.

Il faut noter que le procédé de l'invention s'applique notamment aux véhicules dont les moteurs utilisent de l'essence ou du diesel comme carburant.

Par ailleurs, les véhicules peuvent être des véhicules dits « off road », tels que des engins de chantier, ou des véhicules dits « on road », tels que des véhicules automobiles.

Le procédé de l'invention peut être utilisé plus particulièrement dans le cas où l'additif est un additif de régénération des filtres à particules de type FBC.

Le système pour la mise en œuvre du procédé de l'invention va maintenant être décrit.

Comme indiqué plus haut, ce système comprend un dispositif de distribution d'un additif dans un circuit de circulation de carburant du moteur du véhicule; un dispositif d'analyse du carburant pour mesurer la teneur en additif dans le carburant et des moyens pour l'envoi d'informations en fonction des résultats de l'analyse du carburant obtenus par ledit dispositif d'analyse.

Le dispositif d'analyse peut être placé à tout endroit du circuit dans lequel circule le carburant une fois additivé, notamment dans le réservoir à carburant, dans le module jauge pompe, dans le ou les filtres à carburant, dans le circuit d'alimentation du moteur et/ou le circuit retour vers le réservoir. Ce dispositif peut notamment être localisé à proximité du lieu d'injection de l'additif dans le carburant.

Selon un mode de réalisation particulier, le dispositif d'analyse du carburant est un dispositif de spectroscopie.

Plus précisément, il s'agit d'un dispositif dans lequel la détection et la mesure d'une quantité d'additif dans le carburant sont basées sur une méthode spectroscopique utilisant la technologie infra-rouge : proche infra-rouge (typiquement de 780 à 1400 nm), infra-rouge moyen (typiquement de 1400 à 3000 nm) voire infra-rouge lointain (typiquement 3000 à 1 000 000 nm), visible (typiquement 780 à 380 nm), ultra-violet proche (380-200 nm) ou encore ultraviolet extrême (200 -100 nm). De préférence on utilisera une spectroscopie proche infra-rouge (ou PIR), visible ou ultra-violet proche dans la gamme de longueur d'onde comprise entre 190 et 2500 nm. En effet ces spectroscopies sont bien adaptées à l'analyse des carburants et elles peuvent être mises en œuvre pour des méthodes d'analyse qui sont très sensibles à un changement de composition du carburant.

Les dispositifs de ce type comprennent généralement :
- un dispositif d'éclairage configuré pour générer un faisceau lumineux couvrant la gamme de longueur d'onde choisie;
- une sonde configurée pour que le faisceau lumineux issu du dispositif d'éclairage interagisse avec le carburant à analyser;
- un dispositif d'analyse spectrale configuré pour recevoir le faisceau lumineux après avoir interagi avec le carburant à analyser et pour fournir des mesures en fonction d'une quantité de lumière reçue pour différentes plages de longueur d'onde.

Selon un mode de réalisation préféré, le dispositif d'analyse est conçu pour fonctionner sur une longueur d'onde spécifique, longueur d'onde sélectionnée au regard du type d'additif et du type de carburant (notamment essence ou diesel) et permettant de développer un écart de signal maximal entre le carburant additivé et le carburant non additivé.

De tels dispositifs sont par exemple décrits dans WO 2009/047605, WO 2009/047607 ou encore WO 2009/047608.

Ces technologies permettent l'utilisation de spectromètre sans pièce mobile de type réseau dispersif, transformé de Fourrier, diodes émettrices ou autres. Elles peuvent aussi être miniaturisées et les systèmes d'émission et de détection peuvent être reliés l'un à l'autre par l'intermédiaire de fibre optique. Ainsi ces technologies sont facilement intégrables sur un moteur ou un véhicule. Elles sont également robustes et de faible coût.

Selon un mode de réalisation préféré de l'invention, le système d'additivation de carburant et de diagnostic comprend un dispositif de distribution de l'additif spécifique.

Selon ce mode de réalisation, le dispositif de distribution d'additif comprend :
- un réservoir contenant l'additif,
- une enceinte communiquant avec le circuit de circulation de carburant et à l'intérieur de laquelle est inséré le réservoir contenant l'additif, au moins une paroi mobile et étanche entre ladite enceinte et ledit réservoir assurant d'une part une séparation étanche et d'autre part maintenant une pression identique entre l'additif dans le réservoir et le carburant dans l'enceinte,
- des moyens d'injection de l'additif reliés au réservoir et au circuit de circulation de carburant et permettant de distribuer l'additif dans le circuit de circulation de carburant, lesdits moyens comprenant un canal de distribution reliant le réservoir et le circuit de circulation de carburant.

Selon une caractéristique du dispositif de distribution d'additif selon l'invention, le réservoir d'additif se présente sous la forme d'une poche souple et ladite poche souple constitue la paroi mobile et étanche.

Selon une autre caractéristique du dispositif de distribution d'additif selon l'invention, la paroi mobile et étanche est constituée par une membrane.

Selon encore une autre caractéristique du dispositif de distribution d'additif selon l'invention, la paroi mobile et étanche est constituée par un piston.

Selon une autre caractéristique du dispositif de distribution d'additif selon l'invention, le dispositif comporte un orifice d'entrée de carburant, un orifice de sortie de carburant, un orifice de distribution d'additif et un moyen de génération de différence de pression entre l'orifice d'entrée ou de sortie de carburant et l'orifice de distribution d'additif.

Selon une autre caractéristique du dispositif de distribution d'additif selon l'invention, le moyen de génération de différence de pression se présente sous la forme d'un diaphragme ou d'un venturi.

Selon une autre caractéristique du dispositif de distribution d'additif selon l'invention, le moyen de génération de différence de pression se présente sous la forme d'un élément filtrant.

Selon une autre caractéristique du dispositif de distribution d'additif selon l'invention, le dispositif comporte un canal de distribution de l'additif et un moyen d'obturation totale ou partielle du canal de distribution de l'additif.

Selon une autre caractéristique du dispositif de distribution d'additif selon l'invention, le moyen d'obturation du canal de distribution de l'additif est un moyen électromécanique.

Selon une autre caractéristique du dispositif de distribution d'additif selon l'invention, le dispositif de distribution d'additif comporte un dispositif de filtration du carburant comportant au moins un élément filtrant.

Selon une autre caractéristique du dispositif de distribution d'additif selon l'invention, l'élément filtrant est de forme annulaire et le réservoir d'additif est disposé de manière concentrique à l'intérieur dudit élément filtrant.

Selon une autre caractéristique du dispositif de distribution d'additif selon l'invention, l'élément filtrant est de forme annulaire et le réservoir d'additif est disposé de manière concentrique à l'extérieur de l'élément filtrant.

Selon une autre caractéristique du dispositif de distribution d'additif selon l'invention, l'élément filtrant et le réservoir d'additif sont superposés axialement.

Selon une autre caractéristique du dispositif de distribution d'additif selon l'invention, l'élément filtrant est traversé par le carburant, délimitant un coté amont, situé entre le réservoir de carburant et l'élément filtrant, où circule le carburant non filtré et un coté aval, disposé entre l'élément filtrant et le moteur à combustion, où circule le carburant filtré et en ce que l'additif est diffusé du coté amont.

Selon une autre caractéristique du dispositif de distribution d'additif selon l'invention, l'élément filtrant est traversé par le carburant, délimitant un coté amont, situé entre le réservoir de carburant et l'élément filtrant, où circule le carburant non filtré et un coté aval, disposé entre l'élément filtrant et le moteur à combustion, où circule le carburant filtré et en ce que l'additif est diffusé du coté aval.

Selon une autre caractéristique de l'invention, l'additif est diffusé dans la ligne de retour de carburant du moteur à combustion interne, en aval du système d'injection et vers le réservoir de carburant.

Selon une autre caractéristique de l'invention, la paroi mobile est disposée entre le réservoir d'additif et le coté amont.

Selon une autre caractéristique de l'invention, la paroi mobile est disposée entre le réservoir d'additif et le côté aval.

L'invention concerne également un système d'additivation et de diagnostic dans lequel le dispositif de distribution d'un additif liquide comporte un réservoir d'additif liquide permettant de diffuser un additif dans le circuit de circulation de carburant au moyen d'un canal de distribution, une enceinte d'additif communiquant avec le circuit de circulation de carburant et au moins une paroi mobile et étanche entre ladite enceinte d'additif et le réservoir d'additif assurant d'une part une séparation étanche et d'autre part maintenant une pression identique entre l'additif dans le réservoir d'additif et le carburant dans l'enceinte d'additif et au moins un élément filtrant, le dispositif de distribution étant caractérisé en ce qu'il comporte d'une part une tête de diffusion destinée à être montée de manière permanent sur le circuit de circulation de carburant et comportant un canal de distribution de l'additif dans le circuit de circulation de carburant et, d'autre part, une cartouche comportant l'élément filtrant, le réservoir d'additif et la paroi mobile et étanche, ladite cartouche étant montée de manière amovible sur de la tête de diffusion.

Un avantage du dispositif de distribution de la présente invention réside dans le fait qu'il est possible d'intégrer un diffuseur d'additif aussi bien lors de la conception de nouveaux moteurs que dans des moteurs déjà existants.

Un autre avantage de l'invention réside dans la possibilité de pouvoir diffuser de manière précise une quantité définie d'additif.

Un autre avantage de l'invention réside dans la possibilité de pouvoir diffuser de multiples types d'additif quelle que soit leur composition et/ou quelles que soient leurs propriétés physico-chimiques.

Un autre avantage de l'invention réside dans la compacité du dispositif de distribution d'additif.

Le système d'additivation de carburant et de diagnostic et notamment celui correspondant au mode de réalisation préféré mentionné ci-dessus vont maintenant être décrits plus en détail en référence aux figures annexées.

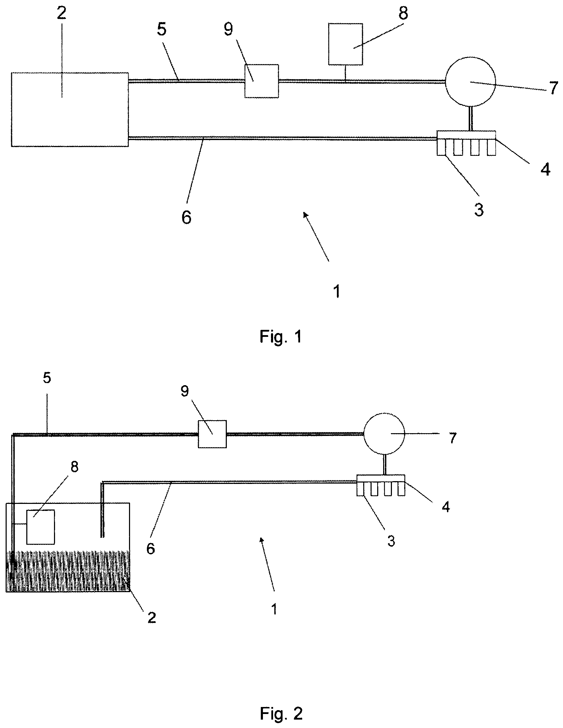

La figure 1 représente schématiquement un circuit 1 de circulation de carburant pour moteur à combustion interne. Classiquement, le circuit 1 de circulation de carburant est disposé entre un réservoir 2 de carburant et la rampe haute pression 4 (également appelée « common rail ») et assure la circulation du carburant entre le réservoir et la rampe haute pression. Le circuit d'alimentation comporte un filtre 9 destiné à filtrer le carburant et une pompe haute pression 7. La pompe haute pression 7 et la rampe haute pression 4 constituent le système d'injection du carburant. Un premier conduit 5, dit « ligne d'alimentation », assure la circulation de carburant depuis le réservoir 2 vers la rampe haute pression 4 et un second conduit 6, dit « ligne retour » assure la circulation de carburant depuis le système d'injection vers le réservoir 2. Le carburant est donc pompé dans le réservoir 2, puis filtré dans le filtre 9 est envoyé sous pression, par l'intermédiaire de la pompe 7, dans la rampe haute pression 4 puis une partie est dirigée vers les injecteurs 3 du moteur et une autre partie retournée au réservoir 2 par la ligne retour 6. Une partie du carburant peut également être envoyé de la pompe haute pression 7 vers la ligne retour 6. Le circuit 1 de circulation de carburant comporte également un dispositif 8 de distribution d'un additif liquide selon l'invention dont le fonctionnement sera décrit par la suite. A titre illustratif et non limitatif, le dispositif 8 de distribution d'un additif a été représenté sur la ligne d'alimentation 5 mais, comme il sera décrit par la suite, ledit dispositif 8 de distribution d'un additif pourra également être disposé sur la ligne retour 6 de carburant.

En variante, comme représenté à la figure 2, le dispositif 8 de distribution d'un additif peut également être disposé dans le réservoir de carburant 2.

Dans ce mode de réalisation, le circuit 1 de circulation de carburant assure la circulation du carburant entre l'intérieur du réservoir de carburant 2 et le moteur, et éventuellement le retour du carburant vers le réservoir 2. Ainsi, la partie du circuit 1 de circulation de carburant supportant le dispositif 8 de distribution s'étend à l'intérieur du réservoir de carburant 2.

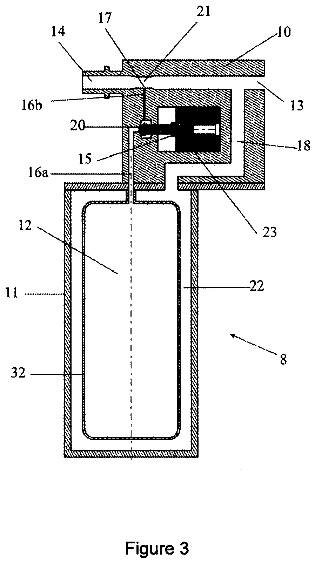

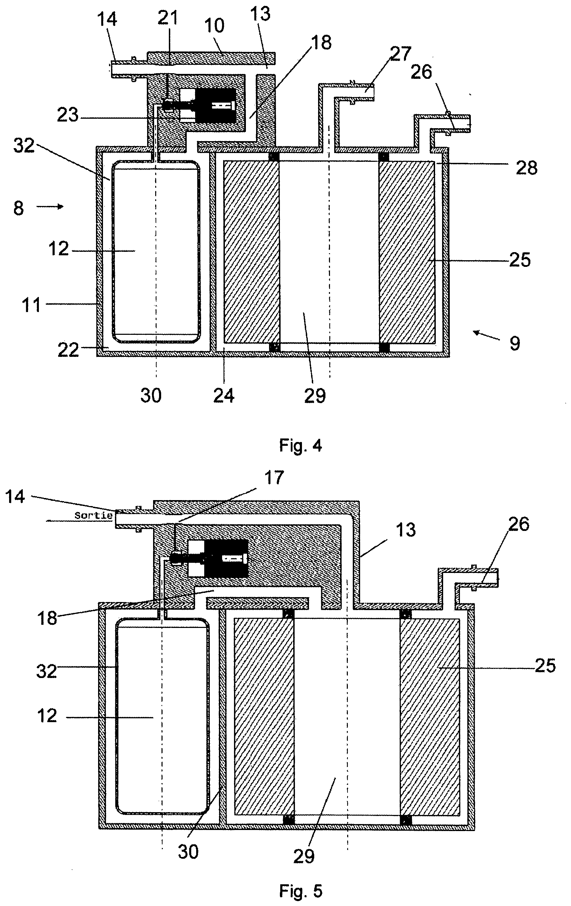

La figure 3 représente, en vue en coupe, un premier mode de réalisation du dispositif de distribution d'additif. Dans cet exemple de réalisation, le dispositif 8 de distribution d'un additif comporte une tête 10 et une cartouche remplaçable 11 formant une enceinte d'additif 22 dans laquelle est disposé un réservoir 12 d'additif liquide. La tête 10 comporte un orifice 13 d'entrée de carburant, un orifice 14 de sortie du carburant, un venturi 21 situé entre les orifices d'entrée et de sortie du carburant, un conduit 18 assurant un passage de carburant entre l'orifice d'entrée du carburant et l'enceinte d'additif 22 à l'intérieur de la cartouche remplaçable 11 et un canal 16 de distribution d'additif assurant le passage de l'additif liquide du réservoir 12 vers un orifice 17 de diffusion d'additif dans le venturi 21. Dans cet exemple de réalisation, le canal 16 de distribution d'additif présente une première portion 16a et une seconde portion 16b de section réduite. Un actionneur 15, constitué d'un doigt 20 et d'une bobine 23 permet d'obturer le passage entre les portions 16a et 16b du canal de distribution d'additif. Dans cet exemple de réalisation (ainsi que dans les figures 4 à 8), le réservoir 12 d'additif se présente sous la forme d'une poche souple 32 constituant une paroi mobile et étanche entre le carburant présent dans l'enceinte d'additif 22 et l'additif à l'intérieur du réservoir 12.

Le fonctionnement de l'invention est le suivant :
Le dispositif 8 de distribution d'un additif est connecté à la ligne d'alimentation ou à la ligne retour de carburant. Le carburant circule donc de manière continue entre les orifices 13 et 14 d'entrée et de sortie du carburant.

Le venturi 21, qui constitue un moyen connu de génération de différence de pression, génère une dépression entre l'orifice 17 de distribution d'additif et l'orifice 13 d'entrée de carburant.

L'enceinte d'additif 22, communiquant par le conduit 18 avec l'orifice 13 d'entrée de carburant, est rempli de carburant à la même pression que le carburant circulant à l'orifice 13 d'entrée de carburant, la poche souple 32, constituant la paroi mobile et étanche du réservoir d'additif maintient une pression identique entre l'additif dans le réservoir d'additif 12 et le carburant dans l'enceinte 22.

La pression dans le réservoir 12 d'additif est donc supérieure à la pression régnant au niveau de l'orifice 17 de diffusion d'additif, ce qui contraint l'additif à se déplacer du réservoir 12 vers l'orifice 17 de diffusion d'additif puis à se diffuser dans le carburant circulant dans le venturi 21 et donc dans le circuit de circulation de carburant. L'actionneur 15 permet d'empêcher totalement ou partiellement la circulation de l'additif.

Dans cet exemple de réalisation, l'actionneur 15 illustre un moyen électromécanique d'obturation totale ou partielle du canal de distribution de l'additif. L'utilisation d'un tel moyen est cependant facultative et on pourra évidemment réaliser l'invention sans obturer le canal de distribution d'additif ou à l'aide d'autres moyens d'obturation du canal de distribution d'additif, par exemple un thermoclapet, un clapet « parapluie », un clapet anti-retour ou un clapet à commande hydraulique.

Les figures 4 à 11 illustrent un dispositif de distribution d'additif selon l'invention comportant au moins un élément filtrant.

La figure 4 illustre une première variante de réalisation de l'invention. Dans cette variante de réalisation, la tête 10 est identique à celle représentée sur la figure 3 et le réservoir d'additif 12 est également réalisé par une poche souple 32. La cartouche 11 comporte une paroi étanche 30 délimitant, en coopération avec les parois de la cartouche, d'une part l'enceinte d'additif 22 dans laquelle est disposé le réservoir 12 d'additif liquide et d'autre part une enceinte de filtration 24 dans laquelle est disposé un élément filtrant 25. Ainsi, le réservoir d'additif 12 et l'élément filtrant 25 sont disposés cote à cote mais séparés par la paroi étanche 30. L'élément filtrant 25 est de forme annulaire et est traversé par le carburant. L'élément filtrant 25 délimite dans l'enceinte de filtration 24 d'une part une zone de carburant non filtré, ou « coté amont 28», située entre le réservoir 2 (non représenté sur cette figure) de carburant et l'élément filtrant 25, où circule le carburant non filtré et une zone de carburant filtré, ou « coté aval 29», disposée entre l'élément filtrant 25 et le moteur à combustion (non représenté sur cette figure), où circule le carburant filtré. Un tel mode de réalisation permet avantageusement d'assurer indépendamment les fonctions de filtration du carburant et de distribution de l'additif liquide. Ainsi, le filtre à carburant est connecté à la ligne d'alimentation 5 alors que la distribution d'additif peut être effectuée aussi bien au niveau de la ligne d'alimentation 5 qu'au niveau de la ligne retour 6.

La figure 5 illustre une seconde variante de réalisation de l'invention. Dans cette variante de réalisation, le réservoir d'additif 12 et l'élément filtrant 25 sont disposés cote à cote, séparés par la paroi 30 mais le canal de communication 18 permet au carburant de circuler directement entre le coté aval 29 de l'élément de filtration et l'enceinte d'additif 22 dans laquelle est disposé le réservoir 12 d'additif liquide. L'orifice 13 d'entrée de carburant de la tête 10 est directement relié au coté aval 29 de l'élément de filtration. L'orifice 17 de diffusion d'additif est disposé au niveau de la ligne d'alimentation en carburant, entre le coté aval 29 de l'élément filtrant et le moteur à combustion interne (non représenté). Ainsi, la paroi mobile 32 est disposée entre le réservoir d'additif 12 et le coté aval 29 de l'élément filtrant et l'additif est diffusé du coté aval 29 de l'élément de filtration.

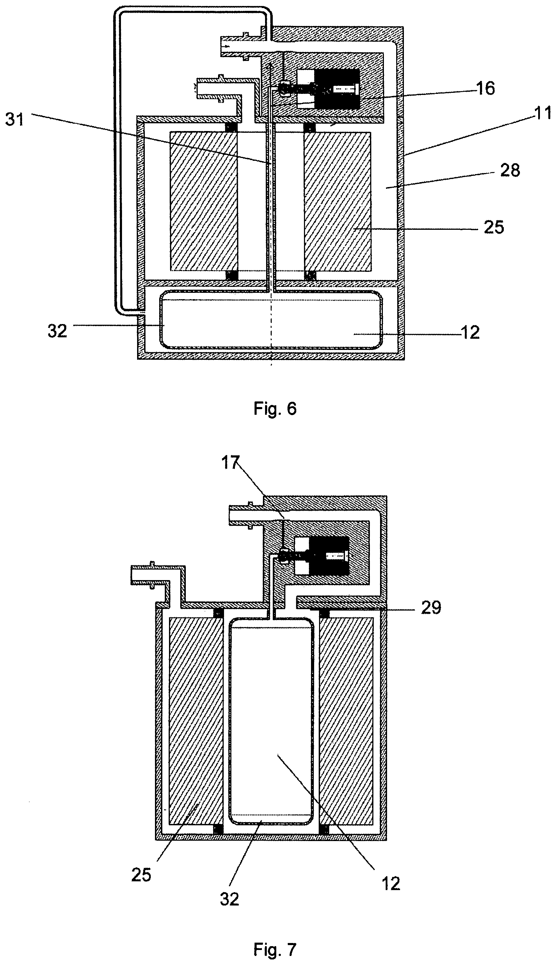

La figure 6 illustre une autre variante de réalisation de l'invention. Dans cette variante de réalisation, le réservoir d'additif 12 et l'élément filtrant 25 sont superposés axialement dans la cartouche 11, un canal de communication permet au carburant de circuler entre le coté amont de l'élément de filtration et l'enceinte d'additif 22 dans laquelle est disposé un réservoir 12 d'additif liquide. Le réservoir d'additif 12 est relié au canal 16 de distribution d'additif au moyen d'une tubulure 31 dont l'extrémité supérieure coopère avec l'extrémité inférieure de la première portion 16a du canal 16 de distribution d'additif. La tubulure 31 est ici coaxiale avec l'élément filtrant annulaire 25 et la traverse de manière étanche en son centre. Dans cet exemple de réalisation la tubulure 31 est solidaire du réservoir d'additif 12. L'orifice 17 de diffusion d'additif est disposé au niveau de la ligne d'alimentation en carburant, entre le coté amont 28 de l'élément filtrant et le réservoir 2 de carburant (non représenté). Ainsi, la paroi mobile 32 est disposée entre le réservoir d'additif 12 et le coté amont 28 de l'élément filtrant et l'additif est diffusé du coté amont 28 de l'élément filtrant.

La figure 7 illustre encore une autre variante de réalisation de l'invention. Dans cette variante de réalisation, l'élément filtrant 25 est de forme annulaire et le réservoir d'additif 12 est disposé de manière concentrique à l'intérieur dudit élément filtrant 25. Le carburant circule, dans cet exemple, radialement de l'extérieur vers l'intérieur de l'élément filtrant 25 et l'orifice 17 de diffusion d'additif est disposé au niveau de la ligne d'alimentation en carburant, entre le coté aval 29 de l'élément filtrant et le moteur à combustion interne (non représenté). Ainsi, la paroi mobile 32 est disposée entre le réservoir d'additif 12 et le coté aval 29 de l'élément filtrant et l'additif est diffusé du coté aval 29 de l'élément de filtration.

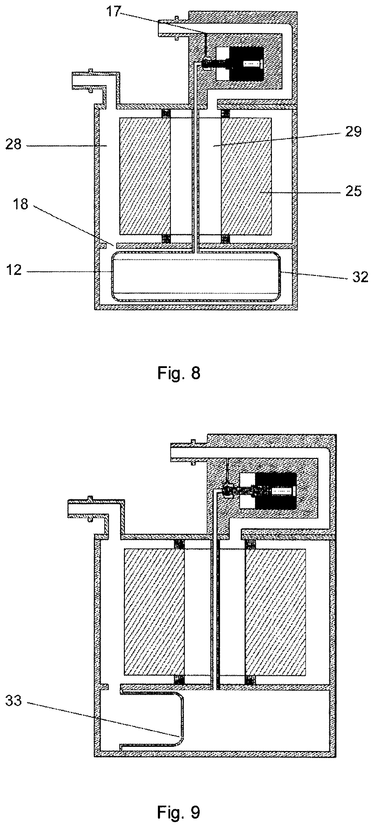

La figure 8 illustre une autre variante de réalisation de l'invention. Dans cette variante de réalisation, le réservoir 12 d'additif et l'élément filtrant 25 sont superposés axialement, séparés par une paroi mais un canal de communication 18 permet au carburant de circuler entre le coté amont 28 de l'élément filtrant 25 et l'enceinte d'additif 22 dans laquelle est disposé le réservoir 12 d'additif liquide. L'orifice 17 de diffusion d'additif est disposé au niveau de la ligne d'alimentation en carburant, entre le coté aval 29 de l'élément filtrant et le moteur à combustion interne (non représenté). Ainsi, la paroi mobile 32 est disposée entre le réservoir d'additif 12 et le coté amont 28 de l'élément filtrant 25 et l'additif est diffusé du coté aval 29 de l'élément filtrant. Dans ce mode de réalisation, le moyen de génération de différence de pression est réalisé par l'élément filtrant 25.

La figure 9 est une variante du dispositif illustré par la figure 8 dans laquelle la paroi mobile et étanche est réalisée par une membrane 33.

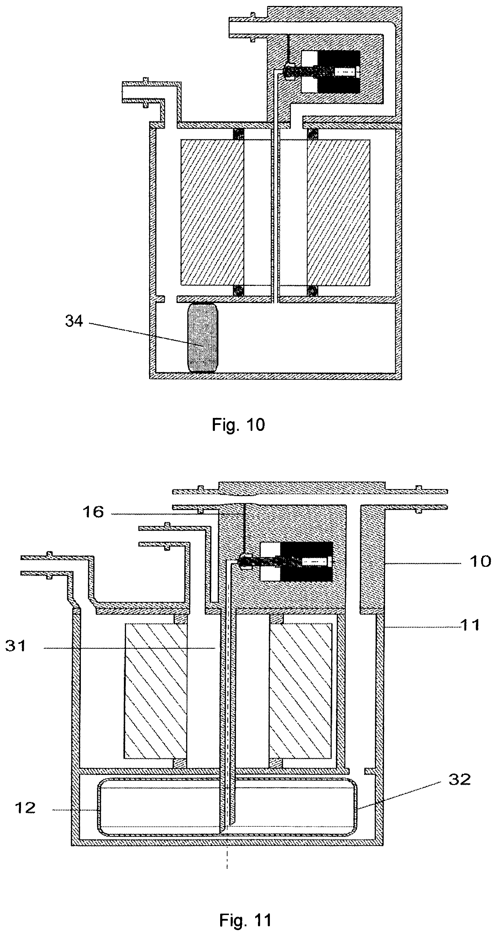

La figure 10 est une variante du dispositif illustré par la figure 8 dans laquelle la paroi mobile et étanche est réalisée par un piston 34.

Ces modes de réalisation ont été cités à titre illustratifs et ne sont en aucun cas limitatifs. L'invention pourra être réalisée sous d'autres variantes. Par exemple, le moyen de génération de différence de pression pourra se présenter sous la forme d'un diaphragme ou le réservoir d'additif pourra être disposé de manière concentrique à l'extérieur de l'élément filtrant.

La figure 11 illustre encore une autre variante de réalisation de l'invention. Dans cette variante de réalisation, l'additif est diffusé dans la ligne de retour 6 de carburant du moteur à combustion interne, en aval du système d'injection et vers le réservoir 2 de carburant (non représenté sur la figure). Le dispositif de distribution d'un additif liquide ainsi illustré comporte d'une part une tête 10 de diffusion destinée à être montée de manière permanent sur le circuit de circulation de carburant et comportant un canal 16 de distribution de l'additif dans le circuit de carburant et d'autre part une cartouche 11 comportant un élément filtrant 25, un réservoir 12 d'additif et une paroi mobile et étanche 32, ladite cartouche 11 étant montée de manière amovible sur de la tête 10 de diffusion. Dans cet exemple de réalisation, la tubulure 31 permettant la circulation de l'additif du réservoir 12 d'additif vers le canal 16 de distribution est solidaire de la tête 10 et comporte une extrémité en biseau afin de percer la poche souple 32 lorsque la cartouche 11 est solidarisée de la tête 10.

Les exemples de réalisation illustrés par les figures sont donnés à titre indicatif et ne sont nullement limitatifs. L'homme du métier comprendra que l'invention concerne également des modes de réalisations non représentés ici mais résultant de la combinaison de plusieurs modes précédemment décrits ou de la substitution d'une ou plusieurs caractéristiques d'une figure par les caractéristiques d'une autre figure.

Les différents additifs pouvant être utilisés par le dispositif de distribution selon l'invention vont à partir de ce point être plus particulièrement décrits, ces additifs étant bien connus dans le domaine technique concerné ici.

Ces additifs peuvent être classés en deux catégories : d'une part ceux qui ont une fonction catalytique d'aide à la régénération des filtres à particules et d'autre part ceux qui ont une fonction autre qu'une fonction catalytique comme les additifs d'amélioration de la distribution du carburant dans le moteur, les additifs d'amélioration des performances du fonctionnement du moteur, les additifs d'amélioration de la stabilité du fonctionnement du moteur.

Les additifs utilisés se présentent généralement sous forme liquide et peuvent être constitués d'un liquide ou d'un mélange de liquides, d'une suspension colloïdale dans une base liquide, ou sous forme de gel dont la viscosité permet l'écoulement de l'additif.

On peut également toutefois utiliser des additifs solides qui vont progressivement se dissoudre ou se désagréger pour libérer la quantité d'additif nécessaire dans le carburant.

### Les additifs d'aide à la régénération

Ces additifs sont idéalement liquides dans la plage de température de fonctionnement, comprise généralement entre 20 et 45°C mais ils peuvent aussi être sous une autre forme physique comme un gel ou encore un solide.

Ces additifs peuvent contenir tout type de catalyseur efficace pour catalyser la combustion des suies notamment le platine, le strontium, le sodium, le manganèse, le cérium, le fer et /ou leur combinaison.

La quantité d'additif nécessaire dans le carburant est généralement au moins d'environ 1 ppm et au plus d'environ 100 ppm, cette quantité étant exprimée en masse d'élément additif métallique par rapport à la masse de carburant.

Ces additifs peuvent se présenter sous la forme d'un sel organométallique ou d'un mélange de sels organométalliques solubles ou dispersibles dans le carburant. Ces sels sont caractérisés en ce qu'ils comprennent au moins une partie métallique et une partie organique complexante généralement d'origine acide, le tout en suspension dans un solvant.

Les additifs FBC peuvent aussi se présenter sous la forme d'un complexe organométallique ou d'un mélange de complexes organométalliques solubles ou dispersibles dans le carburant. Ces complexes sont caractérisés en ce qu'ils comprennent au moins une partie métallique et au moins deux parties organiques complexantes. Un tel produit est par exemple décrit dans GB 2 254 610.

Egalement, les additifs FBC peuvent aussi se présenter sous la forme d'une suspension ou dispersion colloïdale de nanoparticules par exemple d'oxyde ou d'oxyhydroxyde métallique, amorphe ou cristallisé.

L'expression « dispersion colloïdale» désigne dans la présente description tout système constitué de fines particules solides de dimensions colloïdales à base de l'additif, en suspension dans une phase liquide, lesdites particules pouvant, en outre, éventuellement contenir des quantités résiduelles d'ions liés ou adsorbés tels que par exemple des nitrates, des acétates, des citrates, des ammoniums ou des chlorures. Par dimensions colloïdales, on entend des dimensions comprises entre environ 1 nm et environ 500 nm. Ces particules peuvent plus particulièrement présenter une taille moyenne d'au plus 100 nm et encore plus particulièrement d'au plus 20 nm.

Dans le cas des additifs FBC sous forme de dispersion colloïdale, les particules peuvent être à base d'une terre rare et/ou d'un métal choisi dans les groupes IIA, IVA, VIIA, VIII, IB, IIB, IIIB et IVB de la classification périodique.

Par terre rare on entend les éléments du groupe constitué par l'yttrium et les éléments de la classification périodique de numéro atomique compris inclusivement entre 57 et 71.

La classification périodique des éléments à laquelle il est fait référence est celle publiée dans le Supplément au Bulletin de la Société Chimique de France n° 1 (janvier 1966).

Pour ces additifs susceptibles d'être utilisés sous forme d'une dispersion colloïdale, la terre rare peut être choisie plus particulièrement parmi le cérium, le lanthane, l'yttrium, le néodyme, le gadolinium et le praséodyme. Le cérium peut être choisi tout particulièrement. Le métal peut être choisi parmi le zirconium, le fer, le cuivre, le gallium, le palladium et le manganèse. Le fer peut être choisi tout particulièrement. Le fer peut être sous la forme d'un composé amorphe ou cristallisée.

On peut mentionner plus particulièrement aussi les dispersions colloïdales à base d'une combinaison de cérium et de fer.

Les dispersions colloïdales peuvent comprendre plus particulièrement :
- une phase organique,
- des particules de l'additif, du type décrit ci-dessus (notamment terre rare et/ou d'un métal choisi dans les groupes IIA, IVA, VIIA, VIII, IB, IIB, IIIB et IVB), en suspension dans la phase organique ;
- au moins un agent amphiphile.

Ces dispersions colloïdales peuvent notamment contenir un additif à base de fer ou d'un composé de fer.

Les dispersions colloïdales peuvent se présenter selon différents modes de réalisation décrits notamment les demandes de brevet suivantes : EP 671 205, WO 97/19022, WO 01/10545, WO 03/053560, WO 2008/116550.

### Les autres additifs

D'autres types d'additifs connus, différents des FBC et qui ont une fonction autre qu'une fonction catalytique, peuvent également être injectés dans le circuit de circulation. Ces additifs permettent l'amélioration de la distribution du carburant dans le moteur et/ou l'amélioration des performances du fonctionnement du moteur et/ou encore l'amélioration de la stabilité du fonctionnement du moteur.

Parmi les additifs d'amélioration de la distribution de carburant dans le moteur, on trouve par exemple les additifs antimousse, comme les organosilicones, les additifs dégivrants, comme les alcools de poids moléculaires bas ou les glycols.

D'autres additifs sont ceux améliorant le fonctionnement du moteur à froid. On peut citer les additifs polymériques réduisant la température à laquelle le carburant se trouble ou se fige, les additifs favorisant l'écoulement, comme les polymères de hauts poids moléculaires qui réduisent la turbulence dans les fluides et peuvent augmenter le débit de 20 à 40%.

Des additifs inhibiteurs de corrosion peuvent également être utilisés.

Des additifs d'amélioration des performances de fonctionnement des moteurs peuvent également être utilisés, comme les additifs procétane, les additifs prooctane, les additifs inhibiteurs de fumée, les additifs réduisant les pertes par friction appelés additifs FM pour « Friction Modifier » ou additifs « d'extrême pression »..

Des additifs détergents, destinés à limiter tout dépôt au niveau des injecteurs, peuvent également être utilisés. Le carburant peut former en effet des dépôts dans le circuit carburant, notamment au niveau des injecteurs haute pression à carburant et tout particulièrement au niveau des trous des injecteurs. L'ampleur de la formation du dépôt varie avec la conception du moteur, notamment les caractéristiques des injecteurs, la composition du carburant et la composition de l'huile servant à lubrifier le moteur. De plus, ces détergents sont aussi efficaces pour réduire l'impact négatif de la présence de composés métalliques dans le carburant comme le Zn ou le Cu pouvant provenir d'une contamination par exemple du système de distribution du carburant ou encore être des traces de composés provenant du procédé de synthèse des esters d'acide gras.

Les dépôts excessifs peuvent modifier l'aérodynamique par exemple du jet de carburant issu de l'injecteur, laquelle à son tour peut entraver le mélange air-carburant. Dans certains cas, il en résulte une surconsommation de carburant, une perte de puissance du moteur et des émissions de polluants augmentées.

Les additifs détergents présentent la particularité de dissoudre les dépôts déjà formés et de réduire la formation des précurseurs de dépôt, afin d'éviter la formation de nouveaux dépôts. Un exemple d'additif détergent est, par exemple, décrit dans WO 2010/150040.

Des additifs d'amélioration du pouvoir lubrifiant peuvent également être utilisés pour éviter l'usure ou le grippage des pompes à haute pression notamment et des injecteurs, le pouvoir lubrifiant des carburants étant lui médiocre. Ils contiennent un groupe polaire qui est attiré par les surfaces métalliques pour former un film de protection à la surface.

Des additifs d'amélioration de la stabilité de fonctionnement des moteurs peuvent être envisagés. En effet, l'instabilité des carburants entraîne la formation de gommes qui participent à l'encrassement des injecteurs, au colmatage du filtre à carburant et à l'encrassement des pompes et du système d'injection.

Les additifs suivants peuvent également être utilisés :
- des additifs de type antioxydants;
- des additifs stabilisateurs;
- des additifs désactivateurs de métaux visant à neutraliser les effets catalytiques de certains métaux;
- des additifs dispersants visant à disperser les particules formées et prévenir l'agglomération de particules assez grosses.

Selon un mode de réalisation particulier, l'additif est une combinaison d'un additif détergent et d'un additif de lubrification, et éventuellement d'un additif inhibiteur de corrosion.

Dans le cas d'un véhicule équipé d'un FAP, on aura avantage à associer à un additif de type FBC au moins un additif de performance carburant de type détergent comme décrit dans la demande de brevet WO 2010/150040.

Dans le cas d'un véhicule équipé d'un FAP, on aura avantage également à associer à un additif de type FBC plusieurs additifs de performance carburant, notamment lorsque le véhicule est commercialisé dans une zone géographique où le carburant est de qualité variable et/ou médiocre.

Dans le cas d'un véhiculé non équipé d'un FAP, différents types d'associations d'additifs peuvent être envisagés comme celle associant un ou plusieurs détergents à un additif de lubrification et à un inhibiteur de corrosion.

Des exemples vont maintenant être donnés.

### EXEMPLE 1

Cet exemple décrit la mise en œuvre du dispositif en utilisant la spectroscopie visible à nombre d'onde fixe (500 nm) pour détecter la présence d'additif de type FBC dans un carburant diesel. L'additif FBC utilisé dans cet exemple est constitué d'une suspension colloïdale de particules à base de fer telle que la dispersion C de l'exemple 3 de la demande de brevet WO 2010/150040. Cette suspension colloïdale catalytique est typiquement utilisée dans une gamme de concentration permettant d'additiver le carburant avec une concentration en Fer à 7 ppm poids de fer (métal) dans le carburant pour régénérer des FAP de véhicules particuliers comme ceux équipés d'un moteur Euro 5 de 2 L de cylindrée .

Dans cet exemple, 4 carburants différents ont été testés :
- un carburant diesel commercial répondant à la norme européenne EN590;
- un bio-carburant diesel B10 contenant 90% de carburant diesel EN590 et 10% de biodiesel à base d'ester méthylique d'acides gras (EMAG) répondant à la norme EN14214;
- un bio-carburant diesel B30 contenant 70% de carburant diesel EN590 et 30% de biodiesel à base d'ester méthylique d'acides gras (EMAG) répondant à la norme EN14214;
- un carburant de coupe kérosène correspondant au carburant de l'OTAN RF63 d'origine le pétrolier TOTAL.

Ces carburants ont été additivés d'une quantité précise d'additif FBC de façon à conduire à une teneur en FBC dans le carburant correspondant à 5, 6 ou 10 ppm poids.

Chaque carburant avant et après additivation est analysé par le spectromètre à 500 nm de longueur d'onde et on enregistre l'absorbance de la lumière par le carburant. Ces absorbances sont reportées dans le tableau 1 ci-dessous.

On constate que les carburants sans additif ont des absorbances A1 variables entre 0,042 et 0,141. Dans chacun des cas, l'ajout d'additif FBC, même en très petite quantité, conduit à une augmentation de l'absorbance (A2, A3 ou A4), augmentation d'autant plus importante que la quantité de FBC ajoutée est importante. Ceci montre qu'une comparaison de l'absorbance du carburant à 500 nm avant et après additivation permet bien de détecter qu'il y a eu (augmentation) ou non (pas d'augmentation) additivation.

Le tableau indique aussi que la différence d'absorbance entre le carburant additivé et le carburant non additivé est, pour une teneur en additif fixe, identique quel que soit le carburant : typiquement 0,015-0,016 pour 5 ppm de fer et 0,031 - 0,035 pour 10 ppm de fer, 6 ppm de fer conduisant à une absorbance relative intermédiaire (0,023). L'écart est proportionnel à la teneur en additif dans le carburant. Ainsi il est clairement possible de détecter un excès (ou défaut) d'additivation par la valeur de la différence d'absorbance. Ceci montre que ce dispositif permet de détecter une dérive du système.

**Tableau 1**

| | Diesel Commercial EN590 | Diesel B10 | Diesel B30 | Carburant OTAN RF63 |
|---|---|---|---|---|
| A1 = Absorbance carburant non additivé | 0,141 | 0,071 | 0,066 | 0,042 |
| A2 = Absorbance carburant à 5 ppm fer | 0,156 | 0,087 | - | 0,057 |
| A3 = Absorbance carburant à 6 ppm fer | - | - | 0,089 | - |
| A4 = Absorbance carburant à 10 ppm fer | 0,176 | 0,104 | - | 0,073 |
| A2-A1 = Absorbance due 5 ppm fer | 0,015 | 0,016 | - | 0,015 |
| A3-A1 = Absorbance due 6 ppm fer | - | - | 0,023 | - |
| A4-A1 = Absorbance due 10 ppm fer | 0,035 | 0,033 | - | 0,031 |

### EXEMPLE 2

Cet exemple illustre la mise en oeuvre du dispositif en utilisant la spectroscopie visible à nombre d'onde fixe (500 nm) en association avec un dispositif, comme décrit dans la figure 3, de distribution d'un additif liquide identique à celui de l'exemple 1, le spectromètre réalisant la mesure dans le réservoir de carburant et le dispositif de distribution injectant l'additif dans la ligne retour du circuit carburant.

Le dispositif d'injection présente une section d'entrée de la ligne carburant 13 de 6 mm et comprend un venturi 21 de 5,06 mm de diamètre ce qui soumet l'additif à une différence de pression de 16 mbar par rapport à la pression du carburant pour un débit de circulation du carburant de 160 l/h. L'additif est distribué dans le carburant au moyen d'un canal 16b de distribution d'additif d'une longueur de 21 mm et d'un diamètre de 0.6 mm.

Le dispositif d'injection est reglé pour injecter une quantité d'additif après chaque ajout de carburant dans le réservoir de façon à atteindre une concentration constante de 4 ppm en fer dans le carburant.

Une analyse du carburant (diesel commercial répondant à la norme EN590) est effectuée avant le début de chaque injection d'additif et après la fin de chaque injection d'additif par le spectromètre visible installé sur le véhicule.

Afin de simuler un dysfonctionnement sur le véhicule, le dispositif d'injection de l'additif a été déconnecté du circuit carburant avant le quatrième remplissage du réservoir de carburant du véhicule.

**Tableau 2**

| | A1 : Absorbance carburant après l'ajout de carburant et avant l'injection d'additif | A2 : Absorbance carburant après l'injection d'additif suite à l'ajout de carburant | A2 -A1 : |
|---|---|---|---|
| Première injection d'additif | 0,143 | 0,149 | 0,007 |
| Seconde injection d'additif | 0,142 | 0,148 | 0,008 |
| Troisième injection d'additif | 0,143 | 0,150 | 0,009 |
| Quatrième injection d'additif | 0,143 | 0,142 | -0,001 |

On constate (tableau 2) que lors des 3 premières injections le signal d'absorbance augmente lors de l'ajout de l'additif (A2 > A1). La différence d'absorbance suite à l'ajout d'additif est très proche sur les 3 premiers ajouts (A2-A1).

A l'opposé, lorsque le dispositif d'injection de l'additif a été bypassé pour la quatrième injection, on constate que l'absorbance du carburant après additivation théorique n'a pas augmentée, la différence d'absorbance A2-A1 étant quasiment nulle ce qui démontre la capacité du système à détecter un dysfonctionnement du système d'injection d'additif.

## Revendications

1. Système d'additivation de carburant et de diagnostic pour un véhicule à moteur à combustion interne comprenant :
▪ un dispositif de distribution d'au moins un additif, dans un circuit de circulation de carburant du moteur du véhicule lequel comprend:
- un réservoir (12) contenant l'additif,
- une enceinte (22) communiquant avec le circuit (1) de circulation de carburant et à l'intérieur de laquelle est inséré le réservoir (12) contenant l'additif, au moins une paroi (32, 33, 34) mobile et étanche entre ladite enceinte (22) et ledit réservoir (12) assurant d'une part une séparation étanche et d'autre part maintenant une pression identique entre l'additif dans le réservoir (12) et le carburant dans l'enceinte (22),
- des moyens d'injection de l'additif reliés au réservoir (12) et au circuit (1) de circulation de carburant et permettant de distribuer l'additif dans le circuit de circulation (1) de carburant, lesdits moyens comprenant un canal (16, 16a, 16b) de distribution reliant le réservoir (12) et le circuit (1) de circulation de carburant,
- un orifice (13) d'entrée de carburant, un orifice (14) de sortie de carburant, un orifice (17) de distribution d'additif et un moyen (21, 25) de génération de différence de pression entre l'orifice d'entrée (13) ou de sortie (14) de carburant et l'orifice (17) de distribution d'additif;
▪ un dispositif d'analyse du carburant pour mesurer la teneur en additif dans le carburant ;
▪ des moyens pour l'envoi d'informations en fonction des résultats de l'analyse du carburant obtenus par ledit dispositif d'analyse.

2. Système selon la revendication 1, **caractérisé en ce que** le dispositif d'analyse du carburant est un dispositif de spectrométrie.

3. Système selon la revendication 1 ou 2, **caractérisé en ce que** le réservoir (12) d'additif se présente sous la forme d'une poche souple (32) et **en ce que** ladite poche souple (32) constitue la paroi mobile et étanche.

4. Système selon la revendication 1, **caractérisé en ce que** le moyen de génération de différence de pression se présente sous la forme d'un diaphragme ou d'un venturi (21).

5. Système selon la revendication 1, **caractérisé en ce que** le moyen de génération de différence de pression se présente sous la forme d'un élément filtrant (25).

6. Système selon l'une des revendications 1 à 5, **caractérisé en ce qu'**il comporte un moyen (15) d'obturation totale ou partielle du canal (16, 16a, 16b) de distribution de l'additif.

7. Système selon la revendication 6, **caractérisé en ce que** le moyen (15) d'obturation du canal de distribution de l'additif est un moyen électromécanique.

8. Système selon l'une des revendications 1 à 7, **caractérisé en ce que** le dispositif de distribution d'additif comporte un dispositif de filtration du carburant comportant au moins un élément filtrant (25).

9. Système selon la revendication 8, **caractérisé en ce que** l'élément filtrant (25) est de forme annulaire et le réservoir d'additif (12) est disposé de manière concentrique à l'intérieur dudit élément filtrant (25).

10. Système selon la revendication 8, **caractérisé en ce que** l'élément filtrant (25) est de forme annulaire et le réservoir d'additif (12) est disposé de manière concentrique à l'extérieur de l'élément filtrant (25).

11. Système selon la revendication 8, **caractérisé en ce que** l'élément filtrant (25) et le réservoir d'additif (12) sont superposés axialement.

12. Système selon la revendication 8 à 11, **caractérisé en ce que** l'élément filtrant (25) est traversé par le carburant, délimitant un coté amont (28), situé entre le réservoir (2) de carburant et l'élément filtrant (25), où circule le carburant non filtré et un coté aval (29), disposé entre l'élément filtrant (25) et le moteur à combustion, où circule le carburant filtré et **en ce que** l'additif est diffusé du coté amont (28).

13. Système selon la revendication 8 à 11, **caractérisé en ce que** l'élément filtrant (25) est traversé par le carburant, délimitant un coté amont (28), situé entre le réservoir (2) de carburant et l'élément filtrant (25), où circule le carburant non filtré et un coté aval (29), disposé entre l'élément filtrant (25) et le moteur à combustion interne, où circule le carburant filtré et **en ce que** l'additif est diffusé du coté aval (29).

14. Système selon l'une des revendications 1 à 11, **caractérisé en ce que** le dispositif de distribution d'additif est situé de telle manière que l'additif est diffusé dans la ligne de retour (6) de carburant du moteur à combustion interne, en aval du système d'injection et vers le réservoir (2) de carburant.

15. Système selon l'une des revendications 8 à 13, **caractérisé en ce que** la paroi mobile (32, 33, 34) est disposée entre le réservoir d'additif (12) et le coté amont (28).

16. Système selon l'une des revendications 8 à 13, **caractérisé en ce que** la paroi mobile (32, 33, 34) est disposée entre le réservoir d'additif (12) et le coté aval (29).

17. Système selon l'une des revendications 8 à 13, **caractérisé en ce que** le dispositif de distribution d'additif comporte d'une part une tête (10) de diffusion destinée à être montée de manière permanent sur le circuit (1) de circulation de carburant et comportant un canal (17) de distribution de l'additif dans le circuit (1) de circulation de carburant et d'autre part une cartouche (11) comportant l'élément filtrant (25), le réservoir d'additif (12) et la paroi mobile et étanche (32), ladite cartouche (11) étant montée de manière amovible sur de la tête (10) de diffusion.

18. Système selon l'une des revendications 1 à 17, **caractérisé en ce que** l'additif est un additif de régénération des filtres à particules à base d'une terre rare et/ou d'un métal choisi dans les groupes IIA, IVA, VIIA, VIII, IB, IIB, IIIB et IVB de la classification périodique.

19. Système selon la revendication 18, **caractérisé en ce que** l'additif se présente sous forme d'une dispersion colloïdale dont les particules sont à base de cérium et/ou de fer.

20. Système selon l'une des revendications 1 à 17, **caractérisé en ce que** l'additif est un additif permettant l'amélioration de la distribution du carburant dans le moteur et/ou l'amélioration des performances du fonctionnement du moteur et/ou encore l'amélioration de la stabilité du fonctionnement du moteur.

21. Système selon l'une des revendications 1 à 17, **caractérisé en ce que** l'additif est une combinaison d'un additif détergent et d'un additif de lubrification.

22. Procédé pour le diagnostic du dysfonctionnement du dispositif d'additivation d'au moins un additif dans un carburant pour un véhicule à moteur à combustion interne qui est décrit à l'une des revendications 1 à 21, comprenant les étapes suivantes :
- (a) une étape d'analyse du carburant pour mesurer une variation de la teneur en additif dans le carburant;
- (b) une étape de comparaison entre la variation de la teneur en additif mesurée lors de l'étape précédente et une variation théorique de cette teneur;
- (c) une étape d'envoi d'informations lorsque l'écart entre la variation mesurée et la variation théorique de cette teneur en additif dépasse une valeur fixée.

23. Procédé selon la revendication 22, **caractérisé en ce que** l'étape (c) est mise en œuvre en envoyant des informations à au moins un des organes suivants :
- le dispositif d'additivation;
- l'unité centrale électronique du véhicule;
- le système de diagnostic de défaillance central du véhicule.

24. Procédé selon la revendication 22 ou 23, **caractérisé en ce que** l'additif est choisi dans le groupe comprenant les additifs d'aide à la régénération des filtres à particules, les additifs d'amélioration de la distribution du carburant dans le moteur, les additifs d'amélioration des performances du fonctionnement du moteur, les additifs d'amélioration de la stabilité du fonctionnement du moteur.

25. Procédé selon l'une des 22 à 24, **caractérisé en ce qu'**on réalise la mesure de la variation de la teneur en additif du carburant par soustraction d'une valeur obtenue par analyse du carburant avant additivation à une valeur obtenue par analyse du carburant après additivation.

## Patentansprüche

1. System zur Zugabe eines Additivs zu Kraftstoff und zur Diagnose für ein Fahrzeug mit einer Brennkraftmaschine, umfassend:
▪ eine Vorrichtung zur Verteilung wenigstens eines Additivs in einem Kraftstoffkreislauf des Motors des Fahrzeugs, welche umfasst:
- einen Behälter (12), der das Additiv enthält,
- einen Raum (22), der mit dem Kraftstoffkreislauf (1) in Verbindung steht und in dessen Innerem der Behälter (12) eingefügt ist, der das Additiv enthält, wobei wenigstens eine bewegliche und dichte Wand (32, 33, 34) zwischen dem Raum (22) und dem Behälter (12) einerseits eine dichte Trennung sicherstellt und andererseits einen identischen Druck zwischen dem Additiv im Behälter (12) und dem Kraftstoff im Raum (22) aufrechterhält,
- Mittel zur Einspritzung des Additivs, die mit dem Behälter (12) und mit dem Kraftstoffkreislauf (1) verbunden sind und es ermöglichen, das Additiv im Kraftstoffkreislauf (1) zu verteilen, wobei die Mittel einen Verteilungskanal (16, 16a, 16b) umfassender den Behälter (12) und den Kraftstoffkreislauf (1) verbindet,
- eine Kraftstoffeintrittsöffnung (13), eine Kraftstoffaustrittsöffnung (14), eine Öffnung (17) zur Verteilung von Additiv und ein Mittel (21, 25) zur Erzeugung einer Druckdifferenz zwischen der Kraftstoffeintritts- (13) oder -austrittsöffnung (14) und der Öffnung (17) zur Verteilung von Additiv;
▪ eine Vorrichtung zur Analyse des Kraftstoffs, um den Gehalt an Additiv im Kraftstoff zu messen;
▪ Mittel zum Senden von Informationen in Abhängigkeit von den Ergebnissen der Analyse des Kraftstoffs, die durch die Analysevorrichtung erhalten wurden.

2. System nach Anspruch 1, **dadurch gekennzeichnet, dass** die Vorrichtung zur Analyse des Kraftstoffs eine Spektrometrievorrichtung ist.

3. System nach Anspruch 1 oder 2, **dadurch gekennzeichnet, dass** der Additivbehälter (12) die Form eines flexiblen Beutels (32) aufweist, und dadurch, dass der flexible Beutel (32) die flexible und dichte Wand bildet.

4. System nach Anspruch 1, **dadurch gekennzeichnet, dass** das Mittel zur Erzeugung einer Druckdifferenz die Form einer Membran oder eines Venturi-Rohres (21) aufweist.

5. System nach Anspruch 1, **dadurch gekennzeichnet, dass** das Mittel zur Erzeugung einer Druckdifferenz die Form eines Filterelements (25) aufweist.

6. System nach einem der Ansprüche 1 bis 5, **dadurch gekennzeichnet, dass** es ein Mittel (15) zum vollständigen oder teilweisen Verschließen des Kanals (16, 16a, 16b) zur Verteilung des Additivs umfasst.

7. System nach Anspruch 6, **dadurch gekennzeichnet, dass** das Mittel (15) zum Verschließen des Kanals zur Verteilung des Additivs ein elektromechanisches Mittel ist.

8. System nach einem der Ansprüche 1 bis 7, **dadurch gekennzeichnet, dass** die Vorrichtung zur Verteilung von Additiv eine Vorrichtung zur Filterung von Kraftstoff umfasst, die wenigstens ein Filterelement (25) umfasst.

9. System nach Anspruch 8, **dadurch gekennzeichnet, dass** das Filterelement (25) ringförmig ist und der Additivbehälter (12) konzentrisch im Inneren des Filterelements (25) angeordnet ist.

10. System nach Anspruch 8, **dadurch gekennzeichnet, dass** das Filterelement (25) ringförmig ist und der Additivbehälter (12) konzentrisch außerhalb des Filterelements (25) angeordnet ist.

11. System nach Anspruch 8, **dadurch gekennzeichnet, dass** das Filterelement (25) und der Additivbehälter (12) axial übereinander angeordnet sind.

12. System nach Anspruch 8 bis 11, **dadurch gekennzeichnet, dass** das Filterelement (25) von dem Kraftstoff durchströmt wird, wobei es eine stromaufwärtige Seite (28) begrenzt, die sich zwischen dem Kraftstoffbehälter (2) und dem Filterelement (25) befindet, wo der ungefilterte Kraftstoff fließt, und eine stromabwärtige Seite (29), die zwischen dem Filterelement (25) und der Brennkraftmaschine angeordnet ist, wo der gefilterte Kraftstoff fließt, und dadurch, dass das Additiv von der stromaufwärtigen Seite (28) her eingesprüht wird.

13. System nach Anspruch 8 bis 11, **dadurch gekennzeichnet, dass** das Filterelement (25) von dem Kraftstoff durchströmt wird, wobei es eine stromaufwärtige Seite (28) begrenzt, die sich zwischen dem Kraftstoffbehälter (2) und dem Filterelement (25) befindet, wo der ungefilterte Kraftstoff fließt, und eine stromabwärtige Seite (29), die zwischen dem Filterelement (25) und der Brennkraftmaschine angeordnet ist, wo der gefilterte Kraftstoff fließt, und dadurch, dass das Additiv von der stromabwärtigen Seite (29) her eingesprüht wird.

14. System nach einem der Ansprüche 1 bis 11, **dadurch gekennzeichnet, dass** die Vorrichtung zur Verteilung von Additiv derart angeordnet ist, dass das Additiv in die Kraftstoffrücklaufleitung (6) der Brennkraftmaschine eingesprüht wird, stromabwärts des Einspritzsystems und in Richtung des Kraftstoffbehälters (2).

15. System nach einem der Ansprüche 8 bis 13, **dadurch gekennzeichnet, dass** die bewegliche Wand (32, 33, 34) zwischen dem Additivbehälter (12) und der stromaufwärtigen Seite (28) angeordnet ist.

16. System nach einem der Ansprüche 8 bis 13, **dadurch gekennzeichnet, dass** die bewegliche Wand (32, 33, 34) zwischen dem Additivbehälter (12) und der stromabwärtigen Seite (29) angeordnet ist.

17. System nach einem der Ansprüche 8 bis 13, **dadurch gekennzeichnet, dass** die Vorrichtung zur Verteilung von Additiv einerseits einen Sprühkopf (10) umfasst, der dazu bestimmt ist, dauerhaft am Kraftstoffkreislauf (1) angebracht zu werden, und einen Kanal (17) zur Verteilung des Additivs im Kraftstoffkreislauf (1) aufweist, und andererseits eine Patrone (11), die das Filterelement (25), den Additivbehälter (12) und die bewegliche und dichte Wand (32) umfasst, wobei die Patrone (11) lösbar am Sprühkopf (10) angebracht ist.

18. System nach einem der Ansprüche 1 bis 17, **dadurch gekennzeichnet, dass** das Additiv ein Additiv zur Regenerierung der Partikelfilter auf der Basis einer Seltenen Erde und/oder eines aus den Gruppen IIA, IVA, VIIA, VIII, IB, IIB, IIIB und IVB des Periodensystems gewählten Metalls ist.

19. System nach Anspruch 18, **dadurch gekennzeichnet, dass** das Additiv die Form einer kolloidalen Dispersion aufweist, deren Partikel auf Cer und/oder Eisen basieren.

20. System nach einem der Ansprüche 1 bis 17, **dadurch gekennzeichnet, dass** das Additiv ein Additiv ist, das die Verbesserung der Verteilung des Kraftstoffs im Motor und/oder die Verbesserung der Betriebseigenschaften des Motors und/oder auch die Verbesserung der Stabilität des Betriebs des Motors ermöglicht.

21. System nach einem der Ansprüche 1 bis 17, **dadurch gekennzeichnet, dass** das Additiv eine Kombination eines Reinigungsadditivs und eines Schmieradditivs ist.

22. Verfahren zur Diagnose der Funktionsstörung der Vorrichtung zur Zugabe wenigstens eines Additivs zu einem Kraftstoff für ein Fahrzeug mit einer Brennkraftmaschine, die in einem der Ansprüche 1 bis 21 beschrieben ist, die folgenden Schritte umfassend:
- (a) einen Schritt der Analyse des Kraftstoffs, um eine Änderung des Gehalts an Additiv im Kraftstoff zu messen;
- (b) einen Schritt des Vergleichs zwischen der Änderung des Gehalts an Additiv, die im vorhergehenden Schritt gemessen wurde, und einer theoretischen Änderung dieses Gehalts;
- (c) einen Schritt des Sendens von Informationen, wenn die Abweichung zwischen der gemessenen Änderung und der theoretischen Änderung dieses Gehalts an Additiv einen festgelegten Wert überschreitet.

23. Verfahren nach Anspruch 24, **dadurch gekennzeichnet, dass** der Schritt (c) durchgeführt wird, indem Informationen an wenigstens eines der folgenden Organe gesendet werden:
- die Vorrichtung zur Zugabe von Additiv;
- die elektronische Zentraleinheit des Fahrzeugs;
- das zentrale Störungsdiagnosesystem des Fahrzeugs.

24. Verfahren nach Anspruch 22 oder 23, **dadurch gekennzeichnet, dass** das Additiv aus der Gruppe gewählt ist, welche die Additive zur Unterstützung der Regenerierung der Partikelfilter, die Additive zur Verbesserung der Verteilung des Kraftstoffs im Motor, die Additive zur Verbesserung der Betriebseigenschaften des Motors und die Additive zur Verbesserung der Stabilität des Betriebs des Motors umfasst.

25. Verfahren nach einem der 22 bis 24, **dadurch gekennzeichnet, dass** die Messung der Änderung des Gehalts an Additiv im Kraftstoff durch Subtraktion eines Wertes, der durch Analyse des Kraftstoffs vor Zugabe des Additivs erhalten wurde, von einem Wert, der durch Analyse des Kraftstoffs nach Zugabe des Additivs erhalten wurde, durchgeführt wird.

## Claims

1. Fuel additivation and diagnostics system for a vehicle with internal combustion engine comprising:
▪ a device for dispensing at least one additive, into a fuel circulation circuit of the engine of the vehicle which comprises:
- a tank (12) containing the additive,
- a chamber (22) communicating with the fuel circulation circuit (1) and into which is inserted the tank (12) containing the additive, at least one mobile and sealed wall (32, 33, 34) between said chamber (22) and said tank (12) ensuring, on the one hand, a tight separation, and, on the other hand, maintaining an identical pressure between the additive in the tank (12) and the fuel in the chamber (22),
- additive injection means linked to the tank (12) and to the fuel circulation circuit (1) and making it possible to dispense the additive into the fuel circulation circuit (1), said means comprising a dispensing channel (16, 16a, 16b) linking the tank (12) and the fuel circulation circuit (1),
- a fuel input orifice (13), a fuel output orifice (14), an additive dispensing orifice (17) and a means (21, 25) for generating a pressure difference between the fuel input orifice (13) or output orifice (14) and the additive dispensing orifice (17);
▪ a fuel analysis device for measuring the additive content in the fuel;
▪ means for sending information as a function of the results of the analysis of the fuel obtained by said analysis device.

2. System according to Claim 1, **characterized in that** the fuel analysis device is a spectrometry device.

3. System according to Claim 1 or 2, **characterized in that** the additive tank (12) takes the form of a flexible bag (32) and **in that** said flexible bag (32) constitutes the mobile and sealed wall.

4. System according to Claim 1, **characterized in that** the means for generating pressure difference takes the form of a diaphragm or of a venturi (21).

5. System according to Claim 1, **characterized in that** the means for generating pressure difference takes the form of a filtering element (25).

6. System according to one of Claims 1 to 5, **characterized in that** it comprises a means (15) for totally or partially blocking the additive dispensing channel (16, 16a, 16b).

7. System according to Claim 6, **characterized in that** the means (15) blocking the additive dispensing channel is an electromechanical means.

8. System according to one of Claims 1 to 7, **characterized in that** the additive dispensing device comprises a fuel filtration device comprising at least one filtering element (25).

9. System according to Claim 8, **characterized in that** the filtering element (25) is of annular form and the additive tank (12) is disposed concentrically within said filtering element (25).

10. System according to Claim 8, **characterized in that** the filtering element (25) is of annular form and the additive tank (12) is disposed concentrically outside of the filtering element (25).

11. System according to Claim 8, **characterized in that** the filtering element (25) and the additive tank (12) are axially superposed.

12. System according to Claim 8 to 11, **characterized in that** the filtering element (25) is passed through by the fuel, delimiting an upstream side (28), situated between the fuel tank (2) and the filtering element (25), in which the unfiltered fuel circulates and a downstream side (29), disposed between the filtering element (25) and the combustion engine, in which the filtered fuel circulates and **in that** the additive is diffused on the upstream side (28).

13. System according to Claim 8 to 11, **characterized in that** the filtering element (25) is passed through by the fuel, delimiting an upstream side (28), situated between the fuel tank (2) and the filtering element (25), in which the unfiltered fuel circulates and a downstream side (29), disposed between the filtering element (25) and the internal combustion engine, in which the filtered fuel circulates and **in that** the additive is diffused on the downstream side (29).

14. System according to one of Claims 1 to 11, **characterized in that** the additive dispensing device is situated so that the additive is diffused in the fuel return line (6) of the internal combustion engine, downstream of the injection system and to the fuel tank (2).

15. System according to one of Claims 8 to 13, **characterized in that** the mobile wall (32, 33, 34) is disposed between the additive tank (12) and the upstream side (28).

16. System according to one of Claims 8 to 13, **characterized in that** the mobile wall (32, 33, 34) is disposed between the additive tank (12) and the downstream side (29).

17. System according to one of Claims 8 to 13, **characterized in that** the additive dispensing device comprises, on the one hand, a diffusion head (10) intended to be permanently mounted on the fuel circulation circuit (1) and comprising a channel (17) for dispensing additive into the fuel circulation circuit (1) and, on the other hand, a cartridge (11) comprising the filtering element (25), the additive tank (12) and the mobile and sealed wall (32), said cartridge (11) being removably mounted on the diffusion head (10).

18. System according to one of Claims 1 to 17, **characterized in that** the additive is a particulate filter regeneration additive based on a rare earth and/or on a metal chosen from the groups IIA, IVA, VIIA, VIII, IB, IIB, IIIB and IVB of the periodic table.

19. System according to Claim 18, **characterized in that** the additive takes the form of a colloidal dispersion whose particles are based on cerium and/or on iron.

20. System according to one of Claims 1 to 17, **characterized in that** the additive is an additive for enhancing the dispensing of the fuel in the engine and/or enhancing engine operation performance levels and/or even enhancing engine operation stability.

21. System according to one of Claims 1 to 17, **characterized in that** the additive is a combination of a detergent additive and of a lubricating additive.

22. Method for diagnosing the malfunctioning of the additivation device for at least one additive in a fuel for a vehicle with internal combustion engine described in one of Claims 1 to 21, comprising the following steps:
- (a) a step of fuel analysis for measuring a variation of the additive content in the fuel;
- (b) a step of comparison between the variation of the additive content measured in the preceding step and a theoretical variation of this content;
- (c) a step of sending information when the deviation between the measured variation and the theoretical variation of this additive content exceeds a set value.

23. Method according to Claim 22, **characterized in that** the step (c) is implemented by sending information to at least one of the following units:
- the additivation device;
- the electronic central unit of the vehicle;
- the central failure diagnostic system of the vehicle.

24. Method according to Claim 22 or 23, **characterized in that** the additive is chosen from the group comprising additives assisting in the regeneration of particulate filters, additives for enhancing the dispensing of the fuel in the engine, additives for enhancing engine operation performance levels, additives for enhancing engine operation stability.

25. Method according to one of 22 to 24, **characterized in that** the measurement of the variation of the fuel additive content is performed by subtracting a value obtained by analysis of the fuel before additivation from a value obtained by analysis of the fuel after additivation.
